# EUROPÄISCHE PATENTSCHRIFT

(11) **EP 2 871 397 B1**
(45) Veröffentlichungstag und Bekanntmachung des Hinweises auf die Patenterteilung: **02.05.2018**
(21) Anmeldenummer: 14003176.6
(22) Anmeldetag: 13.09.2014
(51) Int. Cl.: F16L 25/12, F16L 27/10, F16L 27/113, F16L 51/02, F01N 13/18

(54) **Anordnung zur Verbindung zweier Rohrenden, insbesondere in einem Abgasstrang einer Brennkraftmaschine**
Assembly for connecting two pipe ends, in particular in an exhaust line of an internal combustion engine
Agencement destiné à relier deux extrémités de tuyaux, en particulier dans un système de gaz d'échappement d'un moteur à combustion interne

(30) Priorität: 11.11.2013 DE 102013018809
(43) Veröffentlichungstag der Anmeldung: 13.05.2015
(73) Patentinhaber: MAN Truck & Bus AG, 80995 München (DE)
(72) Erfinder: Türk, Jens, 92353 Kemnath (DE); Lieder, Stefan, 90579 Langenzenn (DE); Beihl, Martin, 90762 Fürth (DE)
(74) Vertreter: Liebl, Thomas

(56) Entgegenhaltungen:
- EP-B1- 2 273 175
- DE-U1-202011 103 947
- US-A- 3 396 992
- US-A- 5 967 193
- US-B1- 6 354 632

## Beschreibung

Die Erfindung betrifft eine Anordnung zur Verbindung zweier Rohrenden, insbesondere in einem Abgasstrang einer Brennkraftmaschine nach dem Oberbegriff des Anspruchs 1.

Bei einer Anordnung zur Verbindung zweier Rohrenden in einem Abgasstrom einer Brennkraftmaschine ist insbesondere die betriebsmäßige thermische Rohrdehnung zu berücksichtigen, durch die die beiden Rohrenden stirnseitig aufeinander zu verlagert werden. Zusätzlich zu einer solchen axialen Verlagerung können auch Winkelfehler und Achsversätze in der Verbindungsanordnung auftreten. Um solche Lagetoleranzen auszugleichen, ist es allgemein bekannt, die einander zugeordneten Rohrenden axial ausgerichtet und beabstandet anzuordnen und durch eine Verbindungsrohreinrichtung dicht zu verbinden welche bei Relativbewegungen der Rohrenden verformbar und/oder verlagerbar ist. Für solche ausgleichende Verbindungsrohreinrichtungen sind beispielsweise jeweils an beide Rohrenden angeschlossene Wellrohrkompensatoren oder Elastomerkompensatoren, insbesondere Silikongummikompensatoren oder auch Steckverbindungen allgemein bekannt. Solche dicht verbindenden Verbindungsrohreinrichtungen sind meist gegen die hohen thermischen Belastungen, wie sie in einem Abgasstrang einer Brennkraftmaschine auftreten, weniger resistent als die verwendeten Rohre, so dass sie Schwachstellen mit der Möglichkeit von Undichtigkeiten bilden können.

Aus EP 2 273 175 B1 ist eine Anordnung zur Verbindung zweier Rohrenden bekannt, wobei die beiden Rohrenden mit einem Axialspalt beabstandet und mittels eines Verbindungsrohrstücks in einer Steckverbindung dergestalt verbunden sind, dass das Verbindungsrohrstück jeweils rohrendinnenseitig mit einem axialen Endabschnitt dicht anliegend in beide Rohrendbereiche eingesteckt ist. Damit wird hier eine thermisch dehnbare und Lagetoleranzen ausgleichende Dichtverbindung zum Verbinden von Rohrenden in einem Motorabgassystem geschaffen. Das Verbindungsrohrstück soll hier aus einer ausscheidungshärtbaren Legierung bestehen. Zudem sollen die Außenflächen des Verbindungsrohrstücks eine verschleißbeständige Beschichtung aufweisen. Eine solche verschleißbeständige galvanisierte Beschichtung ist zudem aus EP 2 096 194 A2 bekannt.
Weiter ist ein Verbindungselement für einen Abgasturbolader einer Brennkraftmaschine bekannt (DE 10 2004 031 807 A1) mit einem zweischaligen Abgaskrümmer, bei dem eine innere Schale einen rohrförmigen Verlängerungsabschnitt aufweist, der sich bis zu einem Abgasturbolader-Gehäuse erstreckt und dort mit einem Radialspalt endet. Dieser Verlängerungsabschnitt wird radial außen dicht von einer flexiblen Verbindungsrohreinrichtung als Wellrohrkompensator abgedeckt. Thermisch hohe Belastungen der inneren Schale des Abgaskrümmers sowie des Verlängerungsabschnitts werden damit nicht unmittelbar an den Wellrohrkompensator weitergeleitet. Wärmedehnungen zwischen dem Abgaskrümmer und dem Abgasturbolader-Gehäuse können im Wellrohrkompensator aufgenommen werden. Der einteilige lange Verlängerungsabschnitt benötigt insbesondere bei Relativbewegungen durch einen Winkel- oder Achsversatz endseitig einen großen freien Auslenkungsweg, so dass nur relativ kleine Relativbewegungen ausgeglichen werden können.

Aus der US 3,396,992 A1 ist eine Anordnung von Rohrenden bekannt, bei dem die inneren Rohrelemente zum besseren Schutz der Verbindungsrohreinrichtung einteilig mit dem Innenrohr ausgebildet sind. Aufgabe der Erfindung ist es, eine gattungsgemäße Anordnung zur Verbindung zweier Rohrenden so auszubilden, dass ein Ausgleich von relativ großen Temperaturdehnungen und Montagetoleranzen, die zu Verschiebungen in Axialrichtung, Winkelfehlern und Achsversätzen führen können, möglich ist und zudem bei einer Durchströmung mit heißem Gas, insbesondere mit einem Abgas einer Abgasvorrichtung eines Kraftfahrzeugs, die thermische Belastung der Verbindungsrohreinrichtung reduziert wird.

Diese Aufgabe wird gelöst mit den Merkmalen der unabhängigen Ansprüche. Vorteilhafte Aus- und Weiterbildungen sind Gegenstand der Unteransprüche.
Erfindungsgemäß wird eine Anordnung zur Verbindung zweier Rohrenden, insbesondere in einem Abgasstrang einer Brennkraftmaschine, vorgeschlagen, wobei die beiden Rohrenden axial ausgerichtet und beabstandet sind und durch eine Verbindungsrohreinrichtung, welche bei Relativbewegungen der Rohrenden verformbar und/oder verlagerbar ist, dicht verbunden sind. Erfindungsgemäß ist vorgesehen, dass die beiden Rohrendbereiche jeweils ein Rohrstück als Inliner aufweisen, wobei die Rohrstücke, vom jeweils zugeordneten Rohrendbereich ausgehend, aufeinander zu gerichtet (vorzugsweise koaxial aufeinander zu gerichtet) frei abstehen und voneinander durch einen Axialspalt beabstandet sind, wobei die Verbindungsrohreinrichtung die beiden Rohrstücke mit einem umlaufenden dichten Ringraum umfasst.

Die Rohrstücke sind durch separate und mit den Rohrendbereichen verbundene, insbesondere fest verbundenen und in diese eingesetzte, Bauteile gebildet. Bei einem derartigen erfindungsgemäßen Aufbau wird der Großteil einer heißen Gasströmung in den zu verbindenden Rohren in den beiden Rohrendbereichen durch die dortigen, lediglich durch einen Axialspalt beabstandeten Rohrstücke geführt. Durch die Integration dieser Rohrstücke als Inliner in die gasführenden Rohrteile ergibt sich ein mit nichtströmendem Gas gefüllter Ringraum zwischen der Verbindungsrohreinrichtung und den Außenflächen der Rohrstücke. Dieser Ringraum entkoppelt die Verbindungsrohreinrichtung thermisch weitgehend von den relativ heißeren gasdurchströmten Bereichen der gasführenden Bauteile. Dadurch wird die Temperatur der Verbindungsrohreinrichtung eher durch die vergleichsweise niederere Temperatur der nicht direkt mit strömendem heißen Gas beaufschlagten Bereiche bestimmt. Durch eine solche Entkopplung werden insbesondere hohe Temperaturdifferenzen in Kontaktflächenbereichen vermieden, die bei Änderung der Gastemperatur insbesondere durch unterschiedliche Materialstärken der Bauteile entstehen können. Solche hohen Temperaturdifferenzen können im schlimmsten Fall hohe thermische Spannungen zur Folge haben, die zum Beispiel zu plastischen Verformungen und damit zu Undichtigkeiten führen können.

Als Verbindungsrohreinrichtung, die die beiden Rohrstücke umfasst, kann ein an sich bekannter Wellrohrkompensator oder ein Elastomerkompensator insbesondere ein Silikongummikompensator, verwendet werden.

Auch Steckverbindungen können verwendet werden. Eine konkrete Verbindungsrohreinrichtung als Steckverbindung ist zum Beispiel aus einem Verbindungsrohrstück und zwei jeweils an den Rohrendbereichen gebildeten und mit einem Axialspalt beabstandeten Muffen aufgebaut. Das Verbindungsrohrstück ist dabei jeweils muffeninnenseitig mit einem axialen Endabschnitt dicht anliegend in beide Muffen eingesteckt. Dabei ist von den Muffe und dem Verbindungsrohrstück der umlaufende dichte Ringraum um die Rohrstücke gebildet. Durch diesen Ringraum ist hier insbesondere die thermische Belastung des Verbindungsrohrstücks, welches mit einer vergleichsweise dünnen Materialstärke gebildet sein kann, reduziert.

In einer bevorzugten Ausführungsform sind die beiden Rohrendbereiche spiegelbildlich gleich ausgebildet.

Die Rohrstücke, gegebenenfalls auch die Rohrstücke und das Verbindungsrohrstück, können im Vergleich zur übrigen Rohrwandstärke geringere Wandstärken aufweisen, wobei die Rohrstücke an ihrer Verbindungsstelle als Inliner im Rohrendbereich unter Weiterführung des anschließenden Rohrdurchmessers angeschlossen, vorzugsweise eingepresst, sind.

Grundsätzlich sind die vorstehenden Anordnungen mit unterschiedlichen Durchmessergestaltungen, beispielsweise mit elliptischen Durchmessern ausführbar. Vorzugsweise werden aber in bekannter Weise für alle verwendeten Bauteile kreisrunde Durchmesser bzw. Kreiszylinderformen verwendet, wobei die Anordnung im unbelasteten Zustand im Verbindungsbereich koaxial ausgeführt ist.

Bei der vorstehenden Ausführungsform mit dem Verbindungsrohrstück und den Muffen ergeben sich am Übergang der Durchmessererweiterung der Muffe zum anschließenden kleineren Rohrdurchmesser Anschlagstufen. Um eine gegenseitige Relativaxialverschiebung der Rohrenden zu ermöglichen, ist es wesentlich, dass die axiale Länge des Verbindungsrohrstücks kleiner ist als der axiale Stufenabstand der beiden gegenüberliegenden Anschlagstufen. Zudem wird vorteilhaft das Verbindungsrohrstück bei einer Axialbewegung für eine dauerhafte dichte Verbindung im Verbindungsbereich zwischen den Anschlagstufen gehalten und kann nicht axial auswandern.

Zweckmäßig wird die Anordnung so getroffen, dass begrenzende axiale Anlagen und Anschläge mit gleichen Abstandsbreiten ausgeführt sind, insbesondere können der erste Axialspalt und der zweite Axialspalt gleich breit sein und der Abstandsdifferenz zwischen der Länge des Verbindungstücks und dem axialen Stufenabstand entsprechen.

In einer bevorzugten Ausführungsform soll das Verbindungsrohrstück in an sich bekannter Weise in der Art eines Doppelstecknippels einen ersten axialen Endabschnitt, einen zweiten axialen Endabschnitt und einen Brückenabschnitt zwischen den beiden Endabschnitten aufweisen. Der erste und zweite Endabschnitt haben jeweils ein koaxiales konvexes Außenprofil mit einer im Wesentlichen kugeligen Außenkrümmung entsprechend dem Innendurchmesser des jeweils zugeordneten Rohrendbereichs. Der Brückenabschnitt hat dagegen ein koaxial konkaves Außenprofil mit einer im Wesentlichen kugeligen Krümmung mit einem Durchmesser kleiner als der Außendurchmesser des ersten und zweiten Endabschnitts. Die Krümmungen und die radiale Spaltweite des Ringraums um die integrierten Rohrstücke sind dabei so gewählt, dass ohne behindernde Anschläge ein Ausgleich von Temperaturdehnungen und Montagetoleranzen, insbesondere Verschiebungen in Axialrichtungen, Winkelfehler und Achsversätze zugelassen werden.

Weiter soll das Verbindungsrohrstück eine ausscheidungshärtbare Legierung aufweisen, so dass sich die Außendurchmesser des ersten und zweiten Endabschnitts auf ein Erwärmen der Verbindung hin im Wesentlichen irreversibel vergrößern.

In einer vorteilhaften Weiterbildungen soll zudem das Verbindungsrohrstück, gegebenenfalls auch die Rohrstücke, eine verschleißbeständige galvanisierte Beschichtung auf der Außenfläche aufweisen, mit einer Matrixphase, die ein Metall oder eine Metalllegierung aufweist sowie mit einer Armierungsphase, die eine Legierung mit der Formel MCrAlY aufweist, wobei M ein Metall oder eine Metalliegierung, Cr Chrom, Al Aluminium und Y Yttrium ist. Die Matrixphase kann insbesondere Partikel von Kobalt, Nickel, Zinn, Zink, Kupfer, Eisen, Wolfram oder eine Kombination von zwei oder mehr davon enthalten.

Die erfindungsgemäße Rohranordnung einer thermisch dehnbaren Dichtverbindung kann vorteilhaft als Bestandteil einer Abgasvorrichtung eines Kraftfahrzeugs, insbesondere eines Nutzfahrzeugs, verwendet werden.

Anhand einer Zeichnung wird die Erfindung weiter beispielhaft erläutert.

### Es zeigen:

- Fig. 1: eine perspektivische Ansicht eines ersten Rohrendes,
- Fig. 2: eine stirnseitige Ansicht des ersten Rohrendes nach Fig. 1,
- Fig. 3: einen Längsschnitt durch das erste Rohrende,
- Fig. 4: eine Anordnung mit einer Verbindung eines ersten Rohrendes und eines zweiten Rohrendes,
- Fig. 5: die Anordnung nach Fig. 4 mit einer Temperaturdehnung und axialen Verschiebung,
- Fig. 6: die Anordnung nach Fig. 4 mit einem Winkelfehler,
- Fig. 7: die Anordnung nach Fig. 4 mit einem Achsversatz, und
- Fig. 8: eine alternative Anordnung im Vergleich zu Fig. 4.

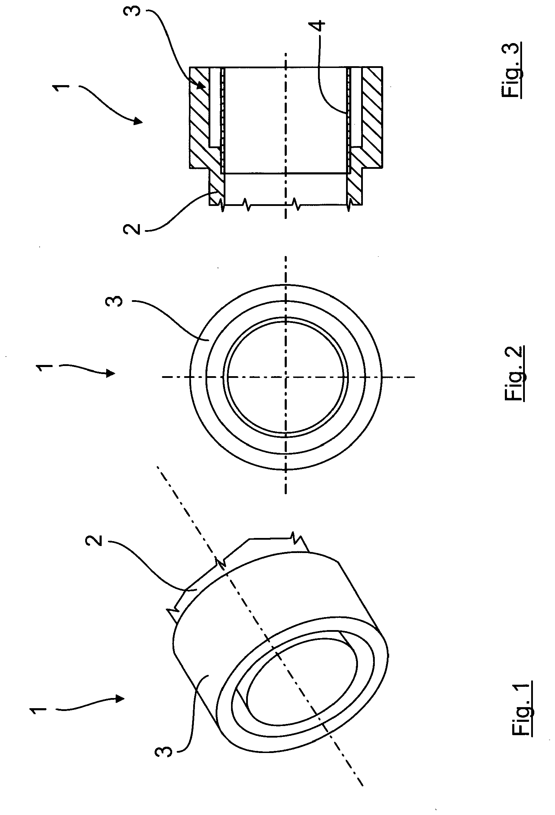

In den Fig. 1 bis 3 ist in unterschiedlichen Ansichten und in einem Längsschnitt ein erstes Rohrende 1 dargestellt, welches beispielhaft an einem freien Ende eines abgasführenden Rohrs 2 einer Abgasanlage ausgebildet ist. Gegebenenfalls kann ein solches Rohrende 1 auch als Rohrstutzen an einem Bauteil der Abgasanlage zum Beispiels an einem Turboladergehäuse angebracht sein. Das erste Rohrende 1 weist eine endseitige Muffe 3 auf mit einer Durchmessererweiterung gegenüber dem anschließenden Rohrdurchmesser des Rohrs 2. Im axialen Bereich der Muffe 3 ist ein erstes Rohrstück 4 als Inliner eingesetzt, das an der Rohrinnenseite zurückversetzt zur Muffenstirnseite mit dem Rohr 2 umlaufend durch Einpressen verbunden ist.

Das erste Rohrstück 4 steht somit im Muffenbereich frei bis zur Stirnseite der Muffe ab. Zudem weist das erste Rohrstück 4 eine geringere Wandstärke als das Rohr 2 bzw. die Muffe 3 auf.

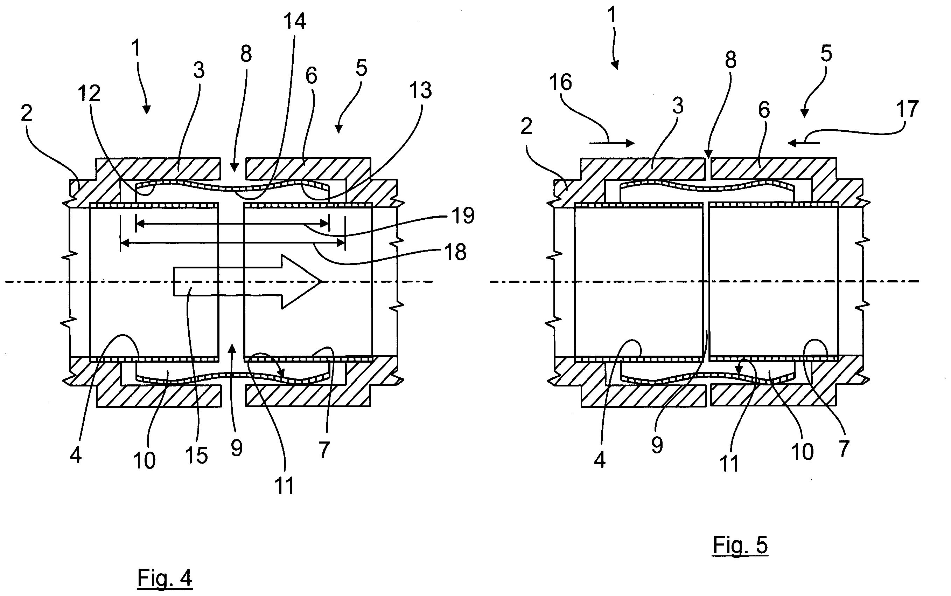

In Fig. 4 ist eine Anordnung mit einer beispielhaften Verbindung von zwei spiegelbildlich gleichen Rohrenden 1 und 5 nach der Montage in einem Längsschnitt gezeigt:
An der linken Seite ist dazu das erste Rohrende 1 mit der ersten Muffe 3 und dem ersten Rohrstück 4 verwendet. Das damit verbundene spiegelbildlich gleiche und in Axialrichtung ausgerichtete zweite Rohrende 5 weist eine zweite Muffe 6 und ein zweites Rohrstück 7 auf.

Die Anordnung ist so durchgeführt, dass sowohl die Muffen 3, 6 als auch die Rohrstücke 4, 7 jeweils durch Axialspalte 8 und 9 beabstandet sind, wobei die Axialspalte 8 und 9 gleiche Breite aufweisen.

Zwischen der Außenseite der Rohrstücke 4 und 7 und der Innenseite der Muffen 3 und 6 ist ein umlaufender Ringraum 10 ausgebildet. In diesem Ringraum 10 ist ein Verbindungsrohrstück 11 zur dichten Verbindung der beiden Muffen 3 und 6 eingesteckt, wobei ein erster Endabschnitt 12 des Verbindungsrohrstücks 11 in die erste Muffe 3 und ein zweiter Endabschnitt 13 des Verbindungsrohrstücks 11 in die zweite Muffe 6 jeweils innenseitig dicht anliegend eingesteckt ist. Die beiden Endabschnitte 12 und 13 haben jeweils ein konvexes kugelförmiges Außenprofil, welches dabei dem Radius der zylindrischen Kontaktflächen der Muffen 3 und 6 entspricht. Die beiden Endabschnitte 12 und 13 sind durch einen Brückenabschnitt 14 verbunden, der ein konkaves Außenprofil aufweist. Auch das Verbindungsrohrstück 11 hat ebenso wie die Rohrstücke 4 und 7 eine vergleichsweise dünne Wandstärke bezüglich der Rohr- bzw. Muffenwandstärke. Zudem sind die Außenflächen des Verbindungsrohrstücks 11 mit einer verschleißbeständigen galvanisierten Beschichtung versehen.

Die Rohrverbindung nach Fig. 4 hat folgende Funktion: der Hauptabgasstrom 15 wird im Verbindungsbereich durch die Rohrstücke 4 und 7 geleitet, wobei nur ein sehr geringer Abgasanteil durch den Axialspalt 9 in den Ringraum 10 gelangt, so dass dieser im Wesentlichen mit nichtströmendem Abgas gefüllt ist. Dadurch ist das Verbindungsrohrstück 11 insbesondere an seinen Kontaktflächen zur Muffeninnenseite thermisch weitgehend vom heißen Hauptabgasstrom 15 abgekoppelt, so dass sich dort vorteilhaft eine vergleichsweise wesentlich geringere Temperatur einstellt. Eine ungünstig hohe Temperaturbelastung des Verbindungsrohrstücks 11 mit seinen Kontaktflächen wird dadurch vermieden.

In Fig. 4 ist der montierte Zustand der Rohrverbindung mit genauer axialer Ausrichtung im kalten Zustand gezeigt.

Im Betriebszustand, wenn die heißen Abgase durch die Rohrverbindung strömen, ergibt sich eine Temperaturdehnung (Pfeile 16, 17), durch die die Muffen 3 und 6 aufeinander zuverlagert werden, wie dies in Fig. 5 dargestellt ist. Im kalten Zustand (Fig. 4) sind daher die Axialspalte 8 und 9 in ihrer Breite sowie der Abstand 18 der Stufenabsätze der Muffen 3, 6 im Verhältnis zur Länge 19 des Verbindungsrohrstücks 11 so zu wählen, dass die maximal mögliche Temperaturausdehnung ohne Anschläge und Bauteilverformungen möglich ist und durch eine Relativverschiebung der Muffen 3 und 6 auf dem Verbindungsrohrstück 11 erfolgen kann, wie dies in Fig. 5 dargestellt ist.

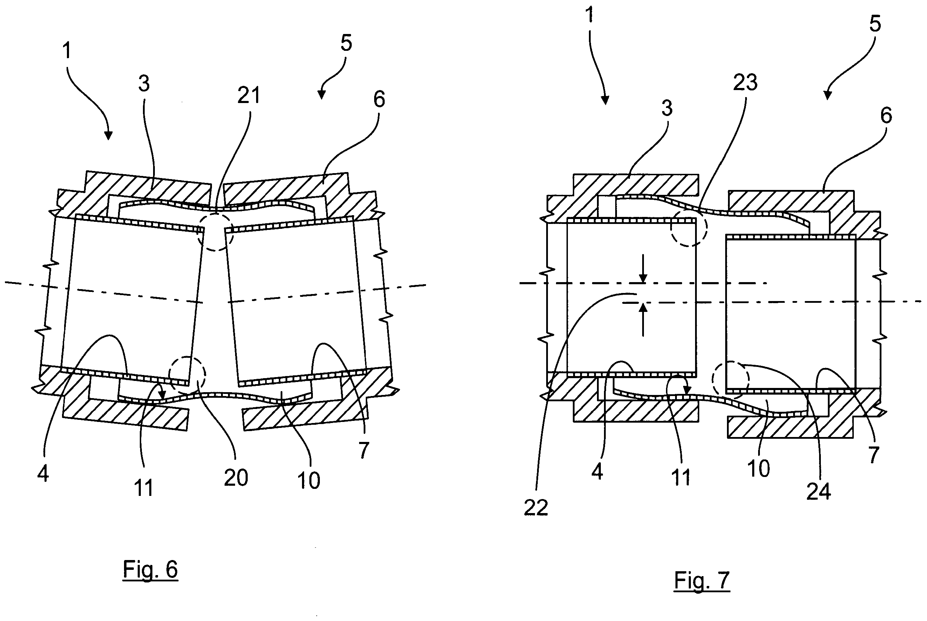

In Fig. 6 ist eine Anordnung entsprechend Fig. 4 gezeigt, womit verdeutlicht wird, dass auch beispielsweise durch Montagetoleranzen hervorgerufenem Winkelfehler in der Rohrverbindung durch die kugelig ausgebildeten Kontaktflächen zwischen dem Verbindungsrohrstück 11 und den-Muffen 3 und 6 ausgeglichen werden können. Auch hier sind insbesondere die Rohrstücke 4 und 7 als Inliner so zu gestalten, dass ein Winkelfehler insbesondere an den Stellen 20, 21 nicht zu Kollisionen führt.

Ähnlich ist durch die kugelförmigen Kontaktflächen zwischen dem Verbindungsrohrstück 11 und den Muffen 3 und 6 auch ein Achsversatz 22 ausgleichbar. Auch hier sind insbesondere die Rohrstücke 4 und 7 so zu gestalten, dass durch den Achsversatz 22 keine Kollisionen an den Stellen 23 und 24 auftreten.

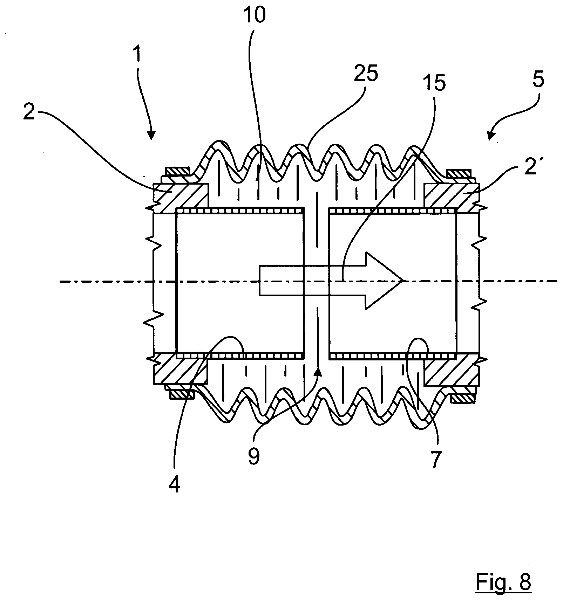

In Fig. 8 ist beispielhaft eine alternative Ausführungsform einer Anordnung zur Verbindung zweier Rohrenden 1 und 5 in einem Abgasstrang einer Brennkraftmaschine dargestellt. Auch hier ist jeweils in ein Rohr 2 ein erstes Rohrstück 4 und gegenüberliegend in ein Rohr 2' ein zweites Rohrstück 7 eingepresst, die sich mit einem Axialspalt 9 stirnseitig gegenüberliegen. Die beiden Rohrstücke 4 und 7 sind von einem Wellrohrkompensator 25 umgeben, dergestalt, dass zwischen der Außenseite der Rohrstücke 4, 7 und den Wellrohrkompensator 25 der Ringraum 10 ausgebildet ist. Der Wellrohrkompensator 25 ist jeweils endseitig dicht mit den Rohren 2, 2' verbunden.

Auch hier verläuft der Hauptabgasstrom (Pfeil 15) durch die Rohre 2, 2' und die Rohrstücke 4, 7, so dass im Ringraum 10 ein weitgehend strömungsfreier Bereich geschaffen ist. Dieser Bereich ist im Vergleich zum Hauptabgasstrom relativ kühl, so dass die thermische Belastung des Wellrohrkompensators 25 entsprechend reduziert ist.

### Bezugszeichenliste

- 1: erstes Rohrende
- 2,2': Rohr
- 3: erste Muffe
- 4: erstes Rohrstück
- 5: zweites Rohrende
- 6: zweite Muffe
- 7: zweites Rohrstück
- 8: Axialspalt
- 9: Axialspalt
- 10: Ringraum
- 11: Verbindungsrohrstück
- 12: erster Endabschnitt
- 13: zweiter Endabschnitt
- 14: Brückenabschnitt
- 15: Hauptabgasstrom
- 16: Pfeil
- 17: Pfeil
- 18: Abstand
- 19: Länge
- 20: Stelle
- 21: Stelle
- 22: Achsversatz
- 23: Stelle
- 24: Stelle
- 25: Wellenrohrkompensator

## Patentansprüche

1. Anordnung zur Verbindung zweier Rohrenden, insbesondere in einem Abgasstrang einer Brennkraftmaschine, beinhaltend zwei Rohrenden, wobei die beiden Rohrenden (1, 5) axial ausgerichtet und beabstandet sind und durch eine Verbindungsrohreinrichtung (3, 6, 11, 25), welche bei Relativbewegungen der Rohrenden verformbar und/oder verlagerbar ist, dicht verbunden sind, wobei die beiden Rohrendbereiche (1, 5) jeweils ein Rohrstück (4, 7) als Inliner aufweisen, wobei die Rohrstücke (4, 7), vom jeweils zugeordneten Rohrendbereich (1, 5) ausgehend, aufeinander zu gerichtet frei abstehen und voneinander durch einen Axialspalt (9) beabstandet sind, wobei die Verbindungsrohreinrichtung (3, 6, 11, 25) die beiden Rohrstücke (4, 7) mit einem umlaufenden dichten Ringraum (10) umfasst, **dadurch gekennzeichnet, dass** die Rohrstücke (4, 7) durch separate und mit den Rohrendbereichen (1, 5) verbundene, in diese eingesetzte Bauteile gebildet sind.

2. Anordnung nach Anspruch 1, **dadurch gekennzeichnet, dass** die Verbindungsrohreinrichtung ein Wellrohrkompensator (25) oder ein Elastomerkompensator, insbesondere ein Silikongummikompensator, oder eine Steckverbindung (3, 6, 11) ist.

3. Anordnung nach Anspruch 2, **dadurch gekennzeichnet,**
**dass** die Verbindungsrohreinrichtung durch ein Verbindungsrohrstück (11) und zwei jeweils an den Rohrendbereichen (1, 5) gebildeten und mit einem Axialspalt (8) beabstandeten Muffen (3, 6) gebildet ist, und
**dass** das Verbindungsrohrstück (11) jeweils muffeninnenseitig mit einem axialen Endabschnitt (12, 13) dicht anliegend in beide Muffen (3, 6) eingesteckt ist, wobei von den Muffen (3, 6) und dem Verbindungsrohrstück (11) der hinlaufende dichte Ringraum (10) um die Rohrstücke (4, 7) gebildet ist.

4. Anordnung nach einem der Ansprüche 1 bis 3, **dadurch gekennzeichnet, dass** die beiden Rohrendbereiche (1, 5) spiegelbildlich gleich ausgebildet sind.

5. Anordnung nach einem der Ansprüche 1 bis 4 **dadurch gekennzeichnet, dass** die Rohrstücke (4, 7), gegebenenfalls die Rohrstücke (4, 7) und das Verbindungsrohrstück (11), im Vergleich zur Rohrend-Wandstärke geringere Wandstärken aufweisen und die Rohrstücke (4, 7) an ihrer Verbindungsstelle als Inliner im Rohrendbereich unter Weiterführung des anschließenden Rohrdurchmessers angeschlossen, vorzugsweise eingepresst, sind.

6. Anordnung nach einem der Ansprüche 1 bis 5, **dadurch gekennzeichnet, dass** die Durchmesser der Rohrenden (1, 5), der Verbindungsrohreinrichtung (3, 6, 11; 25) und der Rohrstücke (4, 7) kreisrund sind und die Anordnung im unbelasteten Zustand koaxial ausgerichtet ist.

7. Anordnung nach einem der Ansprüche 3 bis 6, **dadurch gekennzeichnet, dass** der Übergang von der Durchmessererweiterung der Muffe (3, 6) zum anschließenden Rohrbereich als Anschlagstufe ausgebildet ist und die axiale Länge (19) des Verbindungsrohrstücks (11) kleiner ist als der axiale Stufenabstand (18) der beiden gegenüberliegenden Anschlagstufen.

8. Anordnung nach Anspruch 7, **dadurch gekennzeichnet, dass** die Abstandsdifferenz zwischen der Länge (19) des Verbindungsstücks (11) und dem axialen Stufenabstand (18) sowie die Breite des ersten Axialspalts (8) und die Breite des zweiten Axialspalts (9) gleich sind.

9. Anordnung nach einem der Ansprüche 1 bis 8, **dadurch gekennzeichnet,**
**dass** das Verbindungsrohrstück (11) in der Art eines Doppelstecknippels einen ersten axialen Endabschnitt (12), einen zweiten axialen Endabschnitt (13) und einen Brückenabschnitt (14) zwischen den beiden Endabschnitten (12, 13) aufweist,
**dass** der erste und zweite Endabschnitt (12, 13) jeweils ein koaxiales konvexes Außenprofil hat mit einer im Wesentlichen kugeligen Außenkrümmung entsprechend dem Innendurchmesser des jeweils zugeordneten Rohrendbereichs, und
**dass** der Brückenabschnitt (14) ein koaxial konkaves Außenprofil hat mit einer im Wesentlichen kugeligen Krümmung und einem Durchmesser kleiner als der Außendurchmesser des ersten und zweiten Endabschnitts (12, 13).

10. Anordnung nach Anspruch 9, **dadurch gekennzeichnet, dass** das Verbindungsrohrstück (11) eine ausscheidungshärtbare Legierung aufweist, so dass sich die Außendurchmesser des ersten und zweiten Endabschnitts (12, 13) auf ein Erwärmen der Verbindung hin im Wesentlichen irreversibel vergrößern.

11. Anordnung nach einem der Ansprüche 1 bis 10, **dadurch gekennzeichnet, dass** das Verbindungsrohrstück (11), gegebenenfalls auch die Rohrstücke (4, 7), eine verschleißbeständige galvanisierte Beschichtung auf der Außenfläche aufweist mit
- einer Matrixphase, die ein Metall oder eine Metalllegierung aufweist, und
- einer Armierungsphase, die eine Legierung mit der Formel MCrAlY aufweist, in welcher M ein Metall oder eine Metalllegierung, CR Chrom, Al Aluminium und Y Yttrium ist.

12. Anordnung nach Anspruch 11, dass die Matrixphase verteilt Partikel von Kobalt, Nickel, Zinn, Zink, Kupfer, Eisen, Wolfram oder eine Kombination von zwei oder mehr davon enthält.

13. Fahrzeug, insbesondere Nutzfahrzeug, mit einer Anordnung zur Verbindung zweier Rohrenden, insbesondere in einem Abgasstrang einer Brennkraftmaschine, nach einem der vorhergehenden Ansprüche.

## Claims

1. Arrangement for connecting two pipe ends, in particular in an exhaust tract of an internal combustion engine, comprising two pipe ends, wherein the two pipe ends (1, 5) are axially aligned and spaced apart and are sealingly connected by means of a connecting pipe device (3, 6, 11, 25) which is deformable and/or displaceable in the event of relative movements of the pipe ends, wherein the two pipe end regions (1, 5) have in each case one pipe piece (4, 7) as an inner liner, wherein the pipe pieces (4, 7), proceeding from the respectively associated pipe end region (1, 5), project freely toward one another and are spaced apart from one another by an axial gap (9), wherein the connecting pipe device (3, 6, 11, 25) surrounds the two pipe pieces (4, 7) with an encircling sealed ring-shaped chamber (10), **characterized in that** the pipe pieces (4, 7) are formed by separate components which are connected to and inserted into the pipe end regions (1, 5).

2. Arrangement according to Claim 1, **characterized in that** the connecting pipe device is a corrugated pipe compensator (25) or an elastomer compensator, in particular a silicon rubber compensator, or a plug-type connection (3, 6, 11).

3. Arrangement according to Claim 2, **characterized**
**in that** the connecting pipe device is formed by a connecting pipe piece (11) and two sleeves (3, 6) which are formed in each case on the pipe end regions (1, 5) and which are spaced apart with an axial gap (8), and
**in that** the connecting pipe piece (11) is plugged with an axial end section (12, 13) into both sleeves (3, 6) in a sealingly abutting manner in each case at the sleeve inner side, wherein the forward-running sealed ring-shaped chamber (10) around the pipe pieces (4, 7) is formed by the sleeves (3, 6) and the connecting pipe piece (11).

4. Arrangement according to one of Claims 1 to 3, **characterized in that** the two pipe end regions (1, 5) are of mirror-symmetrical identical form.

5. Arrangement according to one of Claims 1 to 4, **characterized in that** the pipe pieces (4, 7), possibly the pipe pieces (4, 7) and the connecting pipe piece (11), have smaller wall thicknesses than the pipe end wall thickness, and the pipe pieces (4, 7) are, at their connecting point, connected, preferably pressed in, as inner liners in the pipe end region so as to form a continuation of the adjoining pipe diameter.

6. Arrangement according to one of Claims 1 to 5, **characterized in that** the diameters of the pipe ends (1, 5), of the connecting pipe device (3, 6, 11; 25) and of the pipe pieces (4, 7) are circular, and the arrangement is coaxially aligned in the unloaded state.

7. Arrangement according to one of Claims 3 to 6, **characterized in that** the transition from the diameter widening of the sleeve (3, 6) to the adjoining pipe region is formed as an abutment step, and the axial length (19) of the connecting pipe piece (11) is smaller than the axial step spacing (18) of the two opposite abutment steps.

8. Arrangement according to Claim 7, **characterized in that** the spacing difference between the length (19) of the connecting piece (11) and the axial step spacing (18) and also the width of the first axial gap (8) and the width of the second axial gap (9) are equal.

9. Arrangement according to one of Claims 1 to 8, **characterized**
**in that** the connecting pipe piece (11) has, in the manner of a double plug nipple, a first axial end section (12), a second axial end section (13) and a bridge section (14) between the two end sections (12, 13),
**in that** the first and second end sections (12, 13) each have a coaxial, convex outer profile with a substantially spherical outer curvature corresponding to the inner diameter of the respectively associated pipe end region, and
**in that** the bridge section (14) has a coaxially concave outer profile with a substantially spherical curvature and with a diameter smaller than the outer diameter of the first and second end sections (12, 13).

10. Arrangement according to Claim 9, **characterized in that** the connecting pipe piece (11) has a precipitation-hardenable alloy, such that the outer diameters of the first and second end sections (12, 13) substantially irreversibly increase upon heating of the connection.

11. Arrangement according to one of Claims 1 to 10, **characterized in that** the connecting pipe piece (11), and possibly also the pipe pieces (4, 7), have a wear-resistant galvanized coating on the outer surface, with
- a matrix phase, which has a metal or a metal alloy, and
- a reinforcement phase, which has an alloy with the formula MCrAlY, in which M is a metal or a metal alloy, Cr is chromium, Al is aluminium, and Y is yttrium.

12. Arrangement according to Claim 11, in that the matrix phase comprises, in a distributed manner, particles of cobalt, nickel, tin, zinc, copper, iron, tungsten or a combination of two or more of these.

13. Vehicle, in particular utility vehicle, having an arrangement for connecting two pipe ends, in particular in an exhaust tract of an internal combustion engine, according to one of the preceding claims.

## Revendications

1. Agencement destiné à relier deux extrémités de tuyau, en particulier dans une ligne d'échappement d'un moteur à combustion interne, comprenant deux extrémités de tuyau, les deux extrémités de tuyau (1, 5) étant orientées axialement et étant espacées et étant reliées hermétiquement par un système tubulaire de liaison (3, 6, 11, 25) qui peut être déformé et/ou déplacé lors de mouvements relatifs des extrémités de tuyau,
les deux régions d'extrémité de tuyau (1, 5) présentant chacune en tant que chemise intérieure une pièce tubulaire (4, 7), les pièces tubulaires (4, 7), partant de la région d'extrémité de tuyau respectivement associée (1, 5), faisant saillie librement de manière orientée l'une vers l'autre et étant espacées l'une de l'autre par une fente axiale (9), le système tubulaire de liaison (3, 6, 11, 25) enveloppant les deux pièces tubulaires (4, 7) avec un espace annulaire périphérique hermétique (10),
**caractérisé en ce que**
les pièces tubulaires (4, 7) sont formées par des composants séparés et connectés aux régions d'extrémité de tuyau (1, 5) et insérés dans celles-ci.

2. Agencement selon la revendication 1,
**caractérisé en ce que**
le système tubulaire de liaison est un compensateur à tube ondulé (25) ou un compensateur en élastomère, en particulier un compensateur en caoutchouc silicone, ou une liaison par enfichage (3, 6, 11).

3. Agencement selon la revendication 2,
**caractérisé en ce que**
le système tubulaire de liaison est formé par une pièce tubulaire de liaison (11) et deux manchons (3, 6) respectivement formés au niveau des régions d'extrémité de tuyau (1, 5) et espacés par une fente axiale (8), et
**en ce que** la pièce tubulaire de liaison (11) est à chaque fois enfichée dans les deux manchons (3, 6) en s'appliquant hermétiquement du côté intérieur du manchon avec une portion d'extrémité axiale (12, 13), l'espace annulaire étanche (10) s'étendant en avant autour des pièces tubulaires (4, 7) étant formé par les manchons (3, 6) et la pièce tubulaire de liaison (11).

4. Agencement selon l'une quelconque des revendications 1 à 3,
**caractérisé en ce que**
les deux régions d'extrémité de tuyau (1, 5) sont réalisées de manière identique avec une symétrie spéculaire.

5. Agencement selon l'une quelconque des revendications 1 à 4,
**caractérisé en ce que**
les pièces tubulaires (4, 7), éventuellement les pièces tubulaires (4, 7) et la pièce tubulaire de liaison (11), présentent des plus faibles épaisseurs de paroi par rapport à l'épaisseur de paroi de l'extrémité de tuyau et les pièces tubulaires (4, 7) sont raccordées, de préférence par pressage, au niveau de leur zone de liaison, en tant que chemise intérieure, dans la région d'extrémité de tuyau en poursuivant le diamètre de tuyau suivant.

6. Agencement selon l'une quelconque des revendications 1 à 5,
**caractérisé en ce que**
les diamètres des extrémités de tuyau (1, 5) du système tubulaire de liaison (3, 6, 11 ; 25) et des pièces tubulaires (4, 7) sont circulaires et l'agencement est orienté coaxialement dans l'état non sollicité.

7. Agencement selon l'une quelconque des revendications 3 à 6,
**caractérisé en ce que**
la transition de l'élargissement de diamètre du manchon (3, 6) à la région de tuyau suivante est réalisée sous forme d'épaulement de butée et la longueur axiale (19) de la pièce tubulaire de liaison (11) est inférieure à la distance d'épaulement axiale (18) des deux épaulements de butée opposés.

8. Agencement selon la revendication 7,
**caractérisé en ce que**
la différence de distance entre la longueur (19) de la pièce de liaison (11) et la distance d'épaulement axiale (18) et la largeur de la première fente axiale (8) et la largeur de la deuxième fente axiale (9) sont identiques.

9. Agencement selon l'une quelconque des revendications 1 à 8,
**caractérisé en ce que**
la pièce tubulaire de liaison (11) présente, à la manière d'un double raccord enfichable, une première portion d'extrémité axiale (12), une deuxième portion d'extrémité axiale (13) et une portion de pont (14) entre les deux portions d'extrémité (12, 13),
la première et la deuxième portion d'extrémité (12, 13) présentent chacune un profil extérieur coaxial convexe avec une courbure extérieure essentiellement sphérique correspondant au diamètre intérieur de la région d'extrémité de tuyau respectivement associée, et
la portion de pont (14) présente un profil extérieur coaxial concave avec une courbure essentiellement sphérique et un diamètre inférieur au diamètre extérieur de la première et de la deuxième portion d'extrémité (12, 13).

10. Agencement selon la revendication 9,
**caractérisé en ce que**
la pièce tubulaire de liaison (11) présente un alliage durcissable par précipitation, de telle sorte que le diamètre extérieur de la première et de la deuxième portion d'extrémité (12, 13) augmente essentiellement de manière irréversible lors d'un chauffage de la liaison.

11. Agencement selon l'une quelconque des revendications 1 à 10, **caractérisé en ce que**
la pièce tubulaire de liaison (11), éventuellement également les pièces tubulaires (4, 7), présentent un revêtement galvanisé résistant à l'usure sur la surface extérieure avec
- une phase matricielle qui présente un métal ou un alliage métallique, et
- une phase de renforcement qui présente un alliage de formule MCrAlY, dans laquelle M est un métal ou un alliage métallique, CR est le chrome, Al est l'aluminium et Y est l'yttrium.

12. Agencement selon la revendication 11,
**en ce que**
la phase matricielle contient les particules réparties de cobalt, de nickel, d'étain, de zinc, de cuivre, de fer, de tungstène ou une combinaison de deux ou plusieurs de ceux-ci.

13. Véhicule, en particulier véhicule utilitaire comprenant un agencement destiné à relier deux extrémités de tuyau, en particulier dans une ligne d'échappement d'un moteur à combustion interne, selon l'une quelconque des revendications précédentes.
